# EUROPEAN PATENT APPLICATION

(11) **EP 1 438 888 A1**
(43) Date of publication of application: **21.07.2004**
(21) Application number: 02799419.3
(22) Date of filing: 14.08.2002
(51) Int. Cl.: A01F 15/04

(54) **MACHINE FOR THE RECOVERY OF FOREST, AGRICULTURAL AND/OR URBAN WASTE**

(30) Priority: 20.08.2001 ES 200101931
(71) Applicant: Recuperacion y Tratamiento de Biomasa-Trabisa S.L., 46390 San Antonio de Requena, Valencia (ES)
(72) Inventor: GARCIA GARCIA, Francisco, E-46360 San Antonio de Requena, Valencia (ES)
(74) Representative: Naranjo Marcos, Maria Antonia
(86) International application number: PCT/ES2002/000404
(87) International publication number: WO 2003/026388

(57) **Abstract**

The invention relates to a machine for the recovery of forest, agricultural and/or urban waste. The inventive machine cuts up the refuse and compacts the same by means of hydraulic pressure at the waste recovery site. Once the desired compaction has been obtained and the plant refuse has taken on a geometric bale shape, said bales are tied up in bundles using baling wire or another material suitable for said purpose. The inventive machine can be used for the cost-effective recovery of plant refusing resulting from forest, agricultural or gardening pruning or clearing, thereby reducing the cost of transporting and handling refuse owing to the reduction in the volume thereof. In this way, said machine transforms the theory of waste disposal in relation to the ecosystem, by providing cost-effective recovery of plant refuse obtained in an indirect manner and incorporating same into the industrial chain for the production of energy, wood, paper, substrates, peat, oils feed and similar products.

## Description

This invention belongs to the mechanics and logistics sector, in that it consists of a machine for recovery work through the recovery, cutting up, compaction and baling of plant refuse which is usually generated in pruning and clearing work in forests, woodland and other agricultural and urban areas.

Previous technology has mechanical mechanisms for the elimination of this waste, characterized by the crushing of the remains of branches, leaves and green parts of trees, bushes or thickets which are simply crushed and deposited in the place where they are generated. They are subsequently burned, with the consequent risk of fire or they are sent to controlled garbage dumps with the consequent costs and non-use of the materials. This plant refuse blends in with the soil through a natural composting process but this takes a considerable time. On the other hand the presence of this refuse made up of chippings, leaves, green parts etc. on the land forms an ideal environment in which blights which affect plant species can survive and spread. Lastly, leaving this refuse in forest or agricultural areas creates a high risk of creating and spreading of forest fires.

Numerous studies carried out in countries with large agricultural or forest areas, such as for example Finland, have made it clear that the means currently in existence for the recovery of forest waste are insufficient. Currently there are therefore numerous types of chipping machines for forest refuse, however they do not have mechanisms which are able to compact and/or pack the wood waste obtained in such a way that it takes up the least amount of space possible, given that the current system is operated by means of storage compartments attached to the crushing machines and propelled by mechanical means such as a tractor or similar, the residue being obtained in a dispersed way and stored inside the chipping machine without any compaction or density. For this reason the volume capacity is much lower and the vehicles are forced to move in order to transfer the containers once they are full. This procedure is therefore not at all cost-effective and is uneconomical due to the costs of transportation and manipulation of the forest, agricultural or urban waste, so that it is simpler to just leave it in the woodland. In the case of urban or agricultural wood waste, an alternative to just leaving it is for it to be collected and sent to controlled garbage dumps, which generates additional costs.

Current technology thus presents numerous problems as regards the collection and recovery of wood waste, highlighting in particular the low density and high volume taken up by the refuse, and makes it clear that there is a need to develop in situ packaging systems so that the refuse takes up a minimum volume which allows transportation to be made more cost-effective, making its manipulation easier.

It is thus obvious that this sector requires the development of new machines and techniques which will allow the obtaining and recovery of plant refuse to be made more cost-effective, having a bearing on the fundamental problems which arise. One of these is the difficulty involved in transportation and manipulation which considerably increases the costs of the procedures and make them uneconomical. This means that every year hundreds or thousands of tonnes of plant materials from pruning or forest, agricultural or even urban clearing are lost. These are not recovered and could be put to very good use, for example to obtain energy, be it electrical, cogeneration, vapour, calorific (charcoal) etc., as well as for the manufacture of chipboard and other derivatives of the wood industry, application to the paper industry, obtaining raw materials for plant feed, essential oils and natural fertilizers for land (compost).

On the other hand, the technology does have machinery designed for agricultural work capable of baling small diameter, uniform materials, which is the case of the balers for straw, hay etc. However these mechanical mechanisms cannot be compared to the object of this invention, which is capable of cutting up and compacting different kinds, densities and diameters of wood material through pressure, including the possibility of cutting up trunks with a diameter of more than 30 centimetres.

The object of this invention is thus to offer a solution to all the problems currently in existence, making the recovery and the processing of the wood refuse easier, and for its subsequent use, offering a machine capable of recovering, cutting up, compacting and finally baling into geometric shapes with considerably lower volume, plant refuse such as branches, leaves, green parts, trunks and trunk sections of a diameter ranging from 0 to 30 centimetres and more.

In this way, the mechanical mechanism which forms the object of this invention benefits the environment, as well as facilitating consumption and covering the current levels of demand for energy. It also makes use of resources which at present are not cost-efficient with the current systems for the extraction and transformation of these materials.

Thus by means of this invention innumerable advantages are obtained among which, for explanatory purposes only, are the following:
- Improved clearing of woodland and forest areas, agricultural and urban areas.
- Avoidance of the spreading of blights which affect plant species, by removing the refuse from the surface of green and forest areas.
- Removal or considerable reduction of the risk of forest fires being spread, by removing dry plant waste such as branches, chippings etc., which cause and feed fires in the seasons when the risk of fire is highest.
- In one single process and in the actual place where the plant refuse is extracted, sectioning, compaction and baling into regular geometric shapes (bales) is carried out, thus achieving a more simple and economical recovery and transportation process.
- The machine which forms the object of this invention is made up of a process for the treatment of materials and wood waste from pruning or clearing which allows for more cost-effective recovery of the same, substituting the criteria for the removal of waste existing in current technology with that of cost-effective refuse recovery.
- The use of the machine which forms the object of this invention in the actual place where the plant refuse is generated allows collection costs to be reduced compared to the previously existing systems (burning, crushing of refuse etc..) which are substituted by recovery, cutting up, compaction and baling.
- Incorporation into the industrial chain of different products such as chippings, leaves and green parts, which may be used for different purposes. These include the manufacture of chipboard, uses in the paper industry, materials which may be composted for natural fertilizers, substrates, soil for greenhouses, essential oils, energy production, composting sewage sludge, manure etc., thereby indirectly achieving the extraction of a series of plant materials with industrial uses which it would otherwise not be possible to obtain without damaging the ecosystem.

In order for the invention described below to be better understood, we next refer to the attached design diagrams:
Figure number 1: Shows a frontal view of the right-hand side of the machine. The broken lines show what could be one of the movement variants of the machine (traction head); the wheels or caterpillar chains are also shown as an alternative means of movement of the self-moving body.
Figures numbers 2 and 3 show two ground views of the machine body.
Figure number 4 is an upper view of the reclining side hatch mechanism of the feed hopper (4) and the hydraulic piston (4'), showing the opening and closing route of said hatch.

The numerical references of the above designs relate to: The chassis or body of the machine (1); the hydraulic loading arm/claw (2); the feed hopper (3); the hydraulic opening and closing hatch of the hopper (4); the hydraulic arm (4') which moves the aforementioned hatch; counter cutting equipment (5) and cutting equipment (5'); the pressing plate (6); the automaton element (7); the braking tunnel (10); the frame (11); the baling wire, strapping or plastic cord (12); the needles (13); the rear part or platform for expulsion of the bales (14) which supports the rear platform and the power plant or generator (15).

This invention, in a preferred realization method, consists of a mechanical machine for agricultural and/or forest use which is made up of: A chassis or metallic structure (1) preferably made in a single body in a lengthened form in which the following elements or functional parts can be selected:
- (2) Hydraulic loading arm-claw which is responsible for recovering the previously piled-up plant refuse and unloading the plant material into a feed compartment or hopper (3). The function of recovering the plant refuse may also be carried out using other loading methods, without significantly moving away from this invention, such as for example, through an appropriate feed system for collection of the material by means of rollers equipped with claws, a conveyor belt etc. The feed hopper is equipped with one or several inclining side hatches (4) also operated hydraulically, the number of hatches being variable according to the volume and the type of plant or wood material to be treated.
Once the hopper (4) is full with wood waste, the hatch (es) (4) are closed, moving into a completely vertical position. The bringing down and closing of the hatches has a double function during the operation of the machine, namely having the material in the optimum position for it to be cut and keeping or holding the material in place throughout the cutting and compaction process.

The body of the machine also has cutting (5') and counter cutting equipment (5) in the upper part of the chassis of the machine as well as in the upper part of the pressing plate (6). The cutting system works, in this mode of execution, fundamentally through hydraulic pressure and crushing, its operation also being possible through different methods such as cutting with shearing systems or similar.

The cutting equipment of this invention has been adapted to overcome the resistance, hardness and difficulties presented by the different wood waste depending on its nature, condition etc. This equipment is thus capable of cutting up with the same ease, fine branches and refuse or tougher ones such as vine shoots, wood material or tree trunks with a diameter from 0 to 30 centimetres or more. The cutting up operation is in principal carried out with just one cut, however according to the dimensions and characteristics of the material to be cut up it is possible to program this cutting task so that it is carried out several times in succession, according to the needs of the case. The programming of this and other machine management functions is possible thanks to an intelligent element (automaton) (7).

The plant waste, once cut up in accordance with the predetermined measurements, is put into a braking tunnel (8), programmable to exercise different levels of pressure and achieve different levels of compaction. The walls of the braking tunnel (8) have wide grooves (10).

Once put into the braking tunnel, the materials are compacted by means of hydraulic pressure provided by a piston (9) and a pressing plate (6) located inside the machine body.

The hydraulic pressure provided by these two elements is variable according to the density and resistance demands of the wood material to be compacted and is adaptable or adjustable.

As a result of the effect of the pressure, the wood material is compacted until it is transformed into geometric shapes (bales) of variable measurements as regards their width and height. Their length also varies and

is continuous and programmable depending on the characteristics of the materials as well as the handling and conditions for their transportation. The approximate data for length, height and width is situated in the following ranges: Length: Between 40 and 280 centimetres; Height: between 40 and 150 centimetres; and Width: Between 50 and 120 centimetres. These bales subsequently undergo a tying up and baling process by means of a hydraulic or electrical system, consisting of a folding frame (11), which may also be fixed or divided into two sections, according to requirements. The frame is equipped with a series of baling wire, strapping or other appropriate tying materials (12) which surround the bale and a tying system, using needles, chains or other equipment which allow the compacted material to be held down (13). Said frame, in the operational position, unfolds, separates from the machine body and falls back to the side of the machine, when necessary due to the tying system chosen, and is inserted into the grooves in the braking tunnel when the machine begins any movement. In accordance with other various tying systems, it is possible for the frame to be fixed.

The material is compacted continuously, coming to a stop when the programmed bale length has been reached, to be tied up and as it advances, it moves the previous bale, which is expelled through the rear part of the machine by means of a deposit or expulsion platform (14), held in a horizontal position by a hydraulic arm (14').

The transportation of the bales is therefore much simpler and cost-effective due to the smaller space and lower volume taken up, the manipulation and transfer from one place to another being easier, with minimal losses of material in these tasks.

The structure of the machinery may be moved by various means, with anything being allowed for, from self-propulsion with caterpillar chains or wheels, to assembly on mobile work bases such as trucks or cranes. This machinery may also be towed by other means of transport able to travel in an agricultural, forest or urban environment. In any case, the choice of any of these movement methods will be adjusted to the specific needs of the type of task to be carried out and the geographical environment in which it is being operated, without this involving any substantial distancing from the preferred mode of execution which is described here and in which the machine is installed on a mobile work base such as a truck and is towed or moved by means of a mobile vehicle (tractor, retroexcavator etc..).

In any case, the mechanical machinery is operated by means of a combustion engine (diesel oil) (not shown), with an internal combustion (petrol) or electrical engine also being possible. Part of the energy generated by the engine, is transformed in turn into hydraulic energy by means of one or several hydraulic pumps (not shown), connected to the same; the number of pumps to be connected will fundamentally depend on the functions to be carried out and the energy demand which they generate. These pump sections supply the energy necessary for the operation of the different parts.

The machine also has a power plant or generator (15) whose function is to supply an electrical current for lighting, manoeuvring, night work and other needs.

Finally, the manoeuvres of the machine (cutting, pressing, pressure regulation, bringing down of feed hopper hatches etc..) are programmable thanks to an electric panel or an automaton in combination with an electric panel.

The preferred mode of execution may be submitted under variants or adaptations undertaken by an expert in the subject without it being considered that these differ substantially from the object of this invention.

In an alternative form of this invention (not shown in the designs), the machinery is made up of a compact and self-propelled structure, in which the system for recovery and feeding of the wood waste is operated by means of rollers with claws and/or a hydraulically operated conveyor belt which take the materials to be treated up to the hopper or claw. The cutting equipment is also connected or incorporated into the autofeed equipment by rollers or a conveyor belt and the frame is either fixed, with a shape adaptable to the machine, or is in two sections attached to both sides of the machine body, being fixed in this case as it is not necessary for them to fold away in order to speed up the movement of the machine.

The body of needles which slides along the interior of the frame or guide can have straight or curved variants according to the needs of the case, it being obvious that the shape described for the body of needles, is going to condition the profile (curved or straight) of the frame or guide which houses them. Lastly, the tying or baling equipment may be made up instead of metallic wiring by strapping, plastic cord or any other appropriate method of tying up the bale.

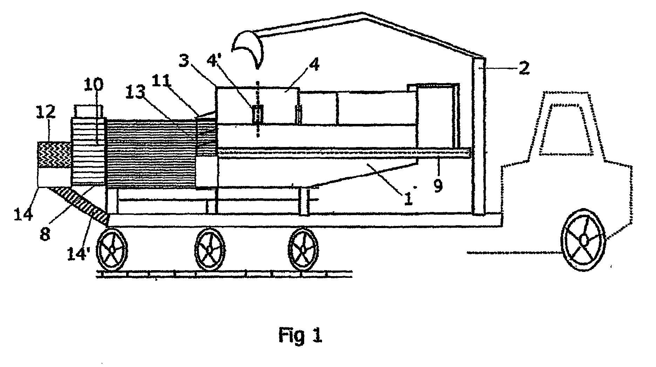

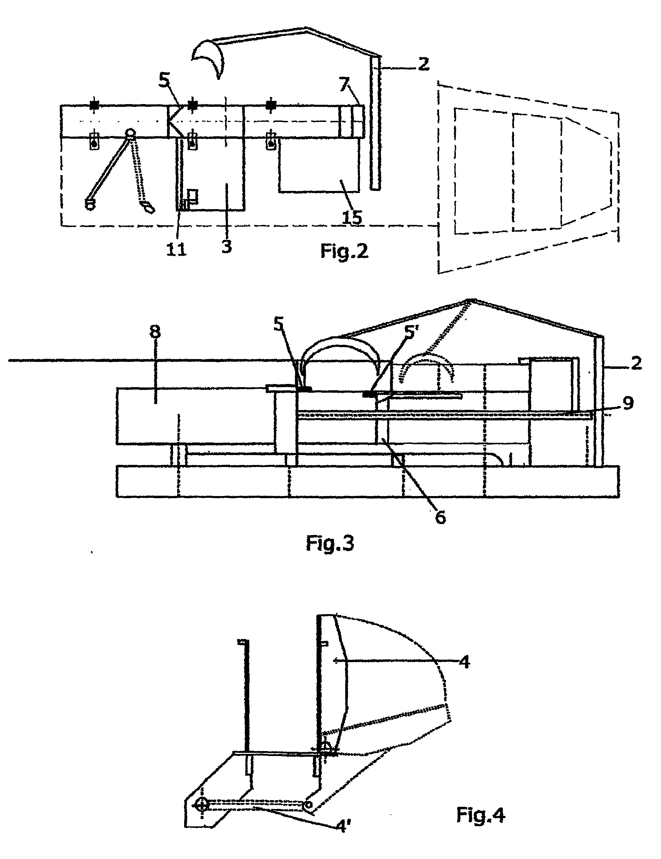

## Claims

1. Machinery for the recovery of forest, agricultural and/or urban waste, **characterized by** consisting of a single body metallic chassis (1), assembled on a mobile work base which consists of:
- Recovery and feed equipment, using hydraulic loading arm-claw (2).
- Feed hopper (3) with one or several fold-down side hatches (4) operated hydraulically (4')
- Cutting (5) and counter cutting (5') equipment located in the upper part of the machine chassis, as well as in the upper part of the pressing plate. (6)
- Equipment for the compaction and pressing of the wood materials made up of:
1. Pressing plate (6).
2. Braking tunnel (8).
3. Piston (9).
- Equipment for the tying and baling of the bales or geometric shapes taken on by the plant materials in the compaction process, consisting of:
1. Folding frame or guide (11).
2. Baling wire (12).
3. Body of needles (13).
- Mechanical equipment for the movement of the machine (internal combustion or combustion engine).
- Hydraulic equipment (pumps or pump section).
- Electrical equipment (power plant or generator).

2. Machinery for the recovery of forest, agricultural and/or urban waste in accordance with claim number one, **characterized by** cutting up wood waste of various non-homogenous kinds and trunk sections with a diameter of up to and over 30 centimetres.

3. Machinery for the recovery of forest, agricultural and/or urban waste, according to claims 1 and 2, **characterized by** being made up of a compacting system applying adequate hydraulic pressure to achieve sufficient uniformity and density to transform the material into transportable units in geometric shapes (bales).

4. Machinery for the recovery of forest, agricultural and/or urban waste, according to claims 1 and 2 **characterized by** subjecting said waste to processing from which geometric shapes (bales) are obtained with an approximate density of between 0.6 and 0.7 tonnes per cubic metre and adaptable and variable measurements as regards length, height and width situated in the following ranges:
Length: Between 40 and 280 centimetres.
Height: Between 40 and 150 centimetres.
Width: Between 50 and 120 centimetres.

5. Machinery for the recovery of forest, agricultural and/or urban waste, according to that established in the above claims, **characterized by** the substitution of the concept of elimination of forest, agricultural or urban wood and plant waste, with that of cost-effective recovery of the same, achieving the incorporation into the industrial chain of raw materials obtained indirectly, without damaging the ecosystem.

6. Machinery for the recovery of forest, agricultural and/or urban waste, according to the above claims, **characterized by** being equipped with means of self propulsion such as wheels, caterpillar chains or any other appropriate means for its movement in agricultural or forest areas.

7. Machinery for the recovery of forest, agricultural and/or urban waste, according to the above claims, **characterized by** consisting of a compact and self-propelled body with a system for the collection of wood waste and feeding of the hopper operated by means of rollers equipped with claws and conveyor belts.

8. Machinery for the recovery of forest, agricultural and/or urban waste, according to claim number 7, **characterized by** the fact that the cutting equipment is connected to the rollers and conveyor belts of the system for the feed and collection of the wood waste.

9. Machinery for the recovery of forest, agricultural and/or urban waste, according to claims 7 and 8, **characterized by** the frame or guide being fixed and straight, with a body of needles which is also straight.

10. Machinery for the recovery of forest, agricultural and/or urban waste, according to claims 7 and 8, **characterized** because the frame is curved and is split into two fixed sections on both sides of the machine body and two bodies of needles which are also curved.

11. Machinery for the recovery of forest, agricultural and/or urban waste, according to claims 7 and 8, **characterized** because the frame is spilt into two fixed sections on both sides of the machine body and is straight, the body of needles also being straight.
